# EUROPÄISCHE PATENTSCHRIFT

(11) **EP 1 103 122 B1**
(45) Veröffentlichungstag und Bekanntmachung des Hinweises auf die Patenterteilung: **17.09.2003**
(21) Anmeldenummer: 99945872.2
(22) Anmeldetag: 01.07.1999
(51) Int. Cl.: H04L 12/56, H04L 29/06

(54) **VERFAHREN ZUR UMLEITUNG VON DATENPAKETEN AUF EIN ALTERNATIVES NETZ**
METHOD FOR RE-ROUTING DATA PACKETS FROM A PACKET TRANSMITTING NETWORK TO AT LEAST ONE OTHER NETWORK
PROCEDE POUR DEVIER DES PAQUETS DE DONNES D'UN RESEAU EMETTEUR DE PAQUETS SUR AU MOINS UN AUTRE RESEAU

(30) Priorität: 03.08.1998 DE 19834977
(43) Veröffentlichungstag der Anmeldung: 30.05.2001
(73) Patentinhaber: SIEMENS AKTIENGESELLSCHAFT, 80333 München (DE)
(72) Erfinder: PREHOFER, Christian, D-81477 München (DE)
(86) Internationale Anmeldenummer: DE9902016
(87) Internationale Veröffentlichungsnummer: WO00008798

(56) Entgegenhaltungen:
- US-A- 5 732 078
- GUNG-CHOU LAI, RUAY-SHIUNG CHANG: "Support Qos in IP over ATM" MASTER THESIS, [Online] Juni 1997 (1997-06), XP002128617 National Taiwan University of Science and Technology, Taipei, Taiwan, R.O.C. Retrieved from the Internet: <URL:http://www.iis.sinica.edu.tw/~gclai/M asterThesis/SupportQoS.zip> [retrieved on 2000-01-24]
- ALMESBERGER W ET AL: "APPLICATION REQUESTED IP OVER ATM (AREQUIPA) AND ITS USE IN THE WEB" NL,AMSTERDAM, IOS, Seite 252-260 XP000754570 ISBN: 90-5199-290-4

## Beschreibung

Die Erfindung betrifft ein Verfahren zur Umleitung von Datenpaketen eines paketvermittelnden Netzes auf zumindest ein alternatives Netz, das eine für diese Datenpakete geforderte Qualitätsgüte sicherstellt, gemäß dem Oberbegriff des Patentanspruchs 1.

In einem paketvermittelnden Netz wie z.B. dem Internet, das in der Regel aus mehreren Teilnetzen besteht, werden Datenpakete von einem Ursprungsknoten gegebenenfalls über mehrere Zwischen- und/oder Zugangsknoten der einzelnen Teilnetze zu einem Zielknoten übertragen. Die Datenpakete enthalten neben Informationen vor allem eine Zieladresse. Die Zwischen- bzw. Zugangsknoten enthalten eine sogenannte Routing-Tabelle zur Bestimmung eines Verkehrsweges, in der jeder Zieladresse eines Datenpaketes eine Zieladresse desjenigen Knotens (d.h. Zwischen - bzw. Zugangsknotens) zugeordnet ist, an den das Datenpaket weitergeleitet wird. Wenn also ein Datenpaket an einem solchen Knoten eintrifft, wird das Datenpaket an den seinem Zieladresseneintrag in der Routing-Tabelle entsprechenden Knoten weitergeleitet.

Die Datenübertragung in einem solchen paketvermittelnden Netz ist normalerweise verbindungslos, d.h. die Datenpakete mit identischer Ursprungs- und Zieladresse werden voneinander unabhängig transportiert, so daß weder die Reihenfolge noch eine Ablieferung der Datenpakete beim Zielknoten garantiert wird (OSI-Schicht-3-Protokoll). Daher kann auch keine Qualitätsgüte der Übertragung von Datenpaketen zwischen Ursprungsund Zielknoten wie beispielsweise eine gewisse Bandbreite, Verzögerungszeiten und ein bestimmter Durchsatz zugesichert werden.

Insbesondere Videoübertragungsdienste (z.B. Video on Demand) und verschiedene Telefondienste (z.B. Voice over IP) erfordern im Internet eine sichere und schnelle Datenübertragung mit einer sichergestellten Qualitätsgüte.

In einem "Internet-Draft"-Dokument, verfaßt von K. Nichols und S. Blake, das von der Internet Engineering Task Force im Februar 1998 veröffentlicht worden ist (Internet-Seite: http://www.ietf.org/internet-drafts/draft-nichols-dsopdef-00.txt), wird ein Verfahren vorgeschlagen, das eine beschleunigte Übertragung von Datenpaketen von einem Ursprungsknoten zu einem Zielknoten ermöglicht.

Für die besonders schnell weiterzuleitenden Datenpakete werden bestimmte Bits des sogannten TOS-Bytes im Kopfteil eines solchen Datenpakets gesetzt. Anhand der gesetzten Bits im TOS-Byte können solche Datenpakete in verschiedene Klassen eingeteilt werden. Gemäß ihrer Klasse werden die mit den gesetzten Bits gekennzeichneten Datenpakete in den Zwischenknoten, über die solche Datenpakete vom Ursprungsknoten zum Zielknoten übertragen werden, bevorzugt behandelt, wodurch vor allem eine beschleunigte Weiterleitung zum nächsten Knoten (Zwischen- oder Zielknoten) erreicht wird.

Ein wesentlicher Nachteil dieses Verfahrens ist darin zu sehen, daß die bevorzugte Behandlung bei der Weiterleitung der mit den gesetzten Bits gekennzeichneten Datenpakete zu erheblichen Verzögerungen bei der Weiterleitung der "normal" zu übermittelnden Datenpakete führt.

Außerdem müssen bei der Weiterleitung der Datenpakete in jedem Zwischenknoten nicht nur die Zieladressen sondern auch die jeweiligen TOS-Bytes berücksichtigt werden.

In einem weiteren "Internet-Draft"-Dokument, verfaßt von Y. Bernet, R. Yavatkar, P. Ford, F. Baker und L. Zhang, das von der Internet Engineering Task Force im März 1998 veröffentlicht worden ist (Internet-Seite: http://www.ietf.org/internet-drafts/draft-bernet-intdiff-00.txt), wird ein Verfahren vorgestellt, das mit Hilfe des vorstehend erläuterten Verfahrens mehrere Anforderungen an das Internet auf eine garantierte Qualitätsgüte für die Übertragung von Datenpaketen in Klassen zusammenfaßt. Gemäß solch einer Klasse wird eine entsprechende Qualitätgüte für die Übertragung von Datenpaketen sichergestellt.

Da eine geforderte Qualitätgüte für die Übertragung von Datenpaketen mittels einer bevorzugten Behandlung derselben aufgrund der vorstehend erwähnten gesetzten Bits im TOS-Byte sichergestellt wird, kann dieses Verfahren auf den eingangs erläuterten Ansatz zurückgeführt werden. Daher bleiben hier die schon eingangs dargelegten Nachteile bestehen.

Ein weiterer Ansatz, dem Benutzer z.B. eines Videoübertragungsdienstes eine von ihm angeforderte Bandbreite zur Übertragung von Datenpaketen bereitzustellen, wird in der US-Patentanmeldung 5,732,078 beschrieben.

Darin ist eine Anordnung eines Zugangsknotens zum Internet offenbart, der durch Umleitung von Datenpaketen auf ein alternatives Netz eine vom Benutzer angeforderte Bandbreite zur Übertragung von Datenpaketen sicherstellt. Hierbei wird die Umleitung der Datenpakete wie folgt vorgenommen:

Wenn ein Benutzer für die Übertragung von Datenpaketen von seiner Benutzerendeinrichtung zu einem Zielknoten eine bestimmte Bandbreite anfordert, wird von dem Zugangsknoten, an dem die Benutzerendeinrichtung angeschlossen ist, eine Punkt-zu-Punkt-Verbindung zu dem Zugangsknoten, mit dem der Zielknoten verbunden ist, über das die angeforderte Bandbreite bereitstellende alternative Netz aufgebaut.

Für die Umleitung der Datenpakete auf das alternative Netz, für deren Übertragung der Benutzer eine sichergestellte Bandbreite anfordert, wird schließlich in dem Zugangsknoten, an dem die Benutzerendeinrichtung angeschlossen ist, eine vorhandene Routing-Tabelle derart modifiziert, dass sie neben den jeweiligen Zieladressen der Knoten, an die Datenpakete jeweils weitergeleitet werden, zusätzlich zumindest die Ursprungsadressen der aufgrund einer vom Benutzer geforderten Qualitätsgüte umzuleitenden Datenpakete enthält. Gemäß einer Modifikation des betreffenden bekannten Verfahrens wird zusätzlich in die erwähnte Routing-Tabelle noch eine verbindungs- bzw. übertragungsindividuelle Angabe ("application port number") eingetragen.

Anhand der zusätzlich gespeicherten Ursprungsadresse und gegebenenfalls der zuvor erwähnten verbindungs- bzw. übertragungsindividuellen Angabe ("application port number") in der Routing-Tabelle können die an einem solchen Zugangsknoten eingehenden Datenpakete danach selektiert werden, ob sie über das gewöhnliche Internet oder über das alternative Netz geleitet werden.

Dieses Verfahren ist sehr aufwendig, da für jede von einem Benutzer veranlaßte Übertragung von Datenpaketen mit einer geforderten Bandbreite eine eigene Verbindung über das alternative Netz aufgebaut werden muß.

Zusätzlich muß in jedem Zugangsknoten, an dem Benutzerendeinrichtungen von Benutzern angeschlossen sind, nach jeder von einem Benutzer veranlaßten Übertragung von Datenpaketen mit einer bestimmten Bandbreite die Routing-Tabelle modifiziert werden.

Als ein weiterer Aufwand ist zu berücksichtigen, dass alle an einem solchen Zugangsknoten eingehenden Datenpakete nach ihrer Ursprungsadresse und gegebenenfalls der verbindungs- bzw. übertragungsindividuellen Angabe ("application port number") untersucht werden, anhand der eine Umleitung auf das alternative Netz veranlaßt werden kann.

Es ist schließlich auch schon bekannt (GUNG-CHOU LAI, RUAY-SHIUNG CHANG: ,Support Qos in IP over ATM' MASTER THESIS, [Online] Juni 1997 (1997-06), National Taiwan University of Science and Technology, Taipei, Taiwan), dass in einem Vermittlungssystem anhand eines Feldes TOS (Type of Service) im Kopfteil von zu vermittelnden bzw. zu Übertragenden Datenpaketen festgelegt werden kann, über welchen Pfad ein Datenpaket in dem Vermittlungssystem zu leiten ist. Diese Maßnahme hat jedoch nichts mit einer Umleitung von Datenpaketen eines paketvermittelnden Netzes auf zumindest ein alternatives Netz zu tun; vielmehr erfolgen die Datenvermittlungen bzw. -übertragungen hier jeweils in ein und demselben Vermittlungssystem.

Die Aufgabe der Erfindung besteht nun darin, ein Verfahren der im Oberbegriff des Patentanspruchs 1 angegebenen Art dahingehend zu entwickeln, dass es mit möglichst geringem Aufwand und mit möglichst geringfügigen Auswirkungen auf seine Umgebung durchgeführt werden kann.

Diese Aufgabe wird durch die im kennzeichnenden Teil des Patentanspruchs 1 angegebenen Merkmale gelöst.

Das Prinzip der Erfindung besteht darin, Datenpakete eines paketvermittelnden Netzes, für deren Übertragung zwischen ihrem Ursprungsknoten und ihrem Zielknoten eine bestimmte Qualitätsgüte gefordert ist, auf zumindest ein alternatives Netz umzuleiten, das eine solche geforderte Qualitätsgüte sicherstellt. Erfindungsgemäß wird diese Umleitung dadurch erreicht, dass die über ein alternative Netz zu leitenden Datenpakete in ihrem Ursprungsknoten lediglich jeweils durch ein dem mit dem Ursprungsknoten direkt oder indirekt über wenigstens einen Zwischenknoten verbundenen Zugangsknoten bekanntes Bitmuster gekennzeichnet werden. Beim Eintreffen solcher Datenpakete in einem solchen Zugangsknoten werden die bekannten Bitmuster allein dadurch jeweils erkannt, und es wird eine Umleitung der mit dem bekannten Bitmuster gekennzeichneten Datenpakete auf ein alternatives Netz veranlaßt.

Ein wesentlicher Vorteil des erfindungsgemäßen Verfahrens ist darin zu sehen, dass die in einem mit einem solchen Ursprungsknoten verbundenen Zugangsknoten vorhandene Tabelle zur Bestimmung der Verkehrswege (Routing-Tabelle) von laufenden Modifikationen für die Umleitung der Datenpakete, für deren Übertragung eine bestimmte Qualitätsgüte gefordert ist, unberührt bleibt.

Weiterhin hat es sich als vorteilhaft erwiesen, wenn Datenpakete nur in dem mit einem Ursprungs knoten verbundenen Zugangsknoten nach dem bekannten Bitmuster untersucht werden müssen.

Die Erfindung zeichnet sich zusätzlich dadurch aus, dass durch die Umleitung der Datenpakete, für deren Übertragung eine geforderte Qualitätsgüte sicherzustellen ist, mit Hilfe der erfindungsgemäß einfachen Selektierung nach einem bekannten Bitmuster der Verkehrsfluß des gewöhnlichen paketvermittelnden Netzes nicht beeinträchtigt wird.

Weitere Ausgestaltungen der Erfindung sind in Unteransprüchen angegeben.

Gemäß einer vorteilhaften Weiterbildung der Erfindung werden die von einem Ursprungsknoten her eintreffenden Datenpakete in eine mit dem Ursprungsknoten direkt oder indirekt verbundenen Zugangsknoten durch ein Filter auf ein dem Zugangsknoten bekanntes Bitmuster überprüft. Wenn ein bekanntes Bitmuster erkannt wurde, dann wird die Umleitung der mit einem solchen Bitmuster gekennzeichneten Datenpakete auf ein alternatives Netz veranlaßt. Dieses Vorgehen ist vor allem deshalb günstig, weil nicht mehr alle an dem Zugangsknoten eingehenden Datenpakete sondern nur noch eine wesentlich geringere Anzahl an Datenpaketen, nämlich die von einem Ursprungsknoten herkommen, auf das bekannte Bitmuster untersucht werden müssen. Außerdem wird dadurch vermieden, daß Datenpakete, die vom Zielknoten zurück an den Ursprungsknoten beispielsweise zum Zwecke einer Bestätigung gesendet werden, auf das alternative Netz umgeleitet werden, wodurch die Datenpakete ungewollt im Kreis herumgeschickt werden.

Eine weitere vorteilhafte Ausgestaltung der Erfindung sieht vor, daß die Funktion des Filters in einem solchen Zugangsknoten vorhandenen Tabelle zur Bestimmung der Verkehrswege (Routing-Tabelle) integriert ist. Dies geschieht durch einen zusätzlichen Eintrag der bekannten Bitmuster, die eine Umleitung eines mit einem solchen Bitmuster gekennzeichneten Datenpaketes auf ein alternatives Netz herbeiführen können. Dadurch, daß bei der Integration der Funktion des Filters in die Routing-Tabelle bereits vorhandene Speicherstrukturen ausgenutzt werden können, verringert sich der Implementierungsaufwand eines solchen Filters erheblich.

Gemäß einer nützlichen Weiterbildung der Erfindung befindet sich ein solches bekanntes Bitmuster im Kopfteil eines über ein alternatives Netz zu leitenden Datenpaketes. Dadurch können die Datenpakete gezielt und somit schnell nach dem bekannten Bitmuster untersucht werden.

Das erfindungsgemäße Verfahren verwendet gemäß einer Weiterbildung zur Kennzeichnung der über ein alternatives Netz zu leitenden Datenpakete jeweils dasselbe Bitmuster unabhängig von der jeweils geforderten Qualitätsgüte. Dadurch wird die Untersuchung solcher Datenpakete auf ein bekanntes Bitmuster erheblich vereinfacht. Außerdem werden die Datenpakete, für deren Übertragung jeweils eine unterschiedliche Qualitätsgüte gefordert ist, zu einer Klasse zusammengefaßt, so daß das alternative Netz für die Übertragung dieser Datenpakete nur eine der geforderten Qualitätsgüten bereitstellen muß.

Alternativ zu der vorstehend genannten Weiterbildung können die Ursprungsknoten zur Kennzeichnung solcher Datenpakete auch unterschiedliche Bitmuster verwenden, die der jeweils geforderten Qualitätsgüte entsprechen. Das hat den Vorteil, daß solche Datenpakete in Klassen gemäß ihrer geforderten Qualitätsgüte eingeteilt werden können. Somit kann das alternative Netz die einer Klasse entsprechende Qualitätsgüte für die Übertragung von Datenpaketen bereitstellen.

Im Zusammenhang mit der vorstehend erläuterten Weiterbildung sieht eine weitere Ausgestaltung der Erfindung vor, daß jedes erkannte Bitmuster eines Datenpaketes eine Umleitung desselben auf ein dem Bitmuster entsprechendes alternatives Netz mit einer geforderten Qualitätsgüte herbeiführt. Mit anderen Worten, Datenpakete einer Klasse werden auf eines der möglichen alternativen Netze umgeleitet, das dem Bitmuster der Klasse entspricht und das die von der Klasse geforderte Qualitätsgüte bereitstellt.

Alternativ zu der vorstehend erwähnten Ausgestaltung der Erfindung kann jedes erkannte Bitmuster eines Datenpaketes eine Umleitung desselben auf ein einziges alternative Netz herbeiführen, das die Qualitätsgüte sicherstellt, die dem Bitmuster und somit der Klasse der Datenpakete entspricht.

Die vorstehend dargestellten Weiterbildungen zur Einteilung der Datenpakete in Klassen entsprechend der geforderten Qualitätsgüte bietet den Vorteil, daß ein alternatives Netz nicht explizit für jede vorzunehmende Übertragung von Datenpaketen die jeweils geforderte Qualitätsgüte bereitstellen muß.

Gemäß einer weiteren vorteilhaften Ausgestaltung der Erfindung kann nach Erkennen eines solchen Bitmusters eines über ein alternatives Netz zu leitenden Datenpaketes in einem solchen Zugangsknoten die Umleitung des Datenpaketes auf ein alternatives Netz verhindert werden, dann wenn das alternative Netz nicht die dem Bitmuster entsprechende Qualitätsgüte bereitstellen kann. Auf diese Weise kann ein solcher Zugangsknoten die zu einer Überlast führenden Datenpakete vor einem solchen alternativen Netz abwehren.

Eine vorteilhafte Weiterbildung der Erfindung sieht vor, daß der Ursprungsknoten, der Datenpakete zu senden beabsichtigt, eine Nachricht bezüglich der über ein alternatives Netz zu leitenden Datenpakete über das paketvermittelnde Netz an seinen Zielknoten übermittelt und gegebenenfalls eine Bestätigung vom Zielknoten erwartet. Dadurch wird ein gesicherter Verbindungsaufbau einer Punkt-zu-Punkt-Verbindung zwischen dem Ursprungs- und dem Zielknoten erreicht.

Eine weitere Ausgestaltung der Erfindung besteht darin, daß der mit einem solchen Ursprungsknoten direkt oder indirekt verbundene Zugangsknoten eine Nachricht bezüglich der vom Ursprungsknoten geforderten, sicherzustellenden Qualitätsgüte an die Netzknoten eines alternativen Netzes sendet und gegebenenfalls eine Bestätigung von diesen erwartet. Diese Vorgehensweise dient der zuverlässigen Bereitstellung der geforderten Qualitätsgüte durch die Netzknoten des alternativen Netzes.

Eine weitere vorteilhafte Ausgestaltung des erfindungsgemäßen Verfahrens kann darin gesehen werden, daß das Verfahren auf eine Netzkonstellation angewendet wird, bei der ein solches alternatives Netz dadurch gebildet wird, daß mindestens ein logischer Kanal des paketvermittelnden Netzes für die mit einer sichergestellten Qualitätsgüte zu übertragenden Datenpakete reserviert wird. D.h. ein alternatives Netz besteht aus einem oder mehreren logischen Kanälen des paketvermittelnden Netzes. Dies stellt eine besonders kostengünstige Lösung dar, da dadurch zusätzliche Verbindungsleitungen für das alternative Netz eingespart werden.

Nachstehend wird ein Ausführungsbeispiel der Erfindung unter Bezugnahme auf eine Zeichnung näher erläutert.

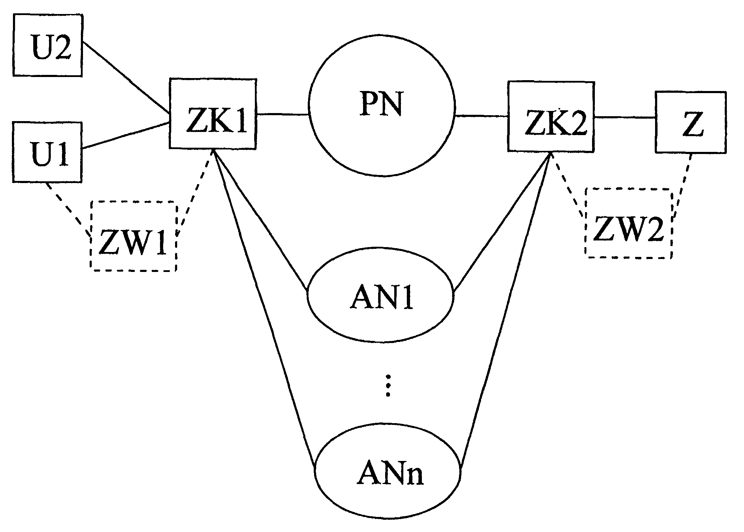

Die Figur deutet einen Ausschnitt eines Kommunikationsnetzes an, auf das das erfindungsgemäße Verfahren beispielhaft angewendet werden kann.

Dementsprechend sind in der Figur zwei Ursprungsknoten U1, U2 mehrerer denkbarer Ursprungsknoten und einer von vielen möglichen Zielknoten Z gezeigt. Die beiden Ursprungsknoten U1, U2 sind mit einem Zugangsknoten ZK1 und der Zielknoten Z mit einem Zugangsknoten ZK2 direkt oder indirekt jeweils über einen oder mehrere Zwischenknoten ZW1, ZW2 verbunden, wie es in der Figur durch den zwischen U1 und ZK1 gestrichelt gezeichneten Zwischenknoten ZW1 und den zwischen ZK2 und Z gestrichelt gezeichneten Zwischenknoten ZW2 angedeutet ist. Die Zugangsknoten ZK1 und ZK2 gehören zu einem paketvermittelnden Netz PN und bilden zugleich jeweils einen Zugang zu einem oder mehreren alternativen Netzen AN1 bis ANn. Ein solches paketvermittelndes Netz könnte beispielsweise das Internet, innerhalb dem Datenpakete vorwiegend variabler Länge übermittelt, oder auch ein ATM-Netz (Asynchronous Transfer Mode) sein, innerhalb dem üblicherweise Datenpakete fester Länge (ATM-Zellen) transportiert werden. Ein solches alternatives Netz kann unter der Voraussetzung, daß es für die Datenübertragung eine geforderte Qualitätsgüte sicherstellt, von einem beliebigen Netztyp beispielsweise einem leitungsvermittelnden Netz, einem paketvermittelnden Netz oder einem ATM-Netz gebildet werden. Auch kann ein solches alternatives Netz aus mindestens einem logischen Kanal des paketvermittelnden Netzes PN bestehen.

Normalerweise werden von den Ursprungsknoten entweder direkt (z.B. von U2 aus) oder indirekt (z.B. von U1 aus) über ein oder mehrere Zwischenknoten z.B. ZW1 Datenpakete zu einem Zugangsknoten z.B. ZK1 zum paketvermittelnden Netz PN gesendet. Von dem Zugangsknoten werden sie über das paketvermittelnde Netz zu einem anderen Zugangsknoten z.B. ZK2 und von dort entweder direkt oder über ein oder mehrere Zwischenknoten z.B. ZW2 zu einem Zielknoten Z gesendet. Ebenso ist eine Übertragung von Datenpaketen in umgekehrter Richtung, also mit dem Zielknoten als Ursprungsknoten und mit dem Ursprungsknoten als Zielknoten, denkbar.

Im Hinblick auf das gesamte Kommunikationsnetz können die angedeuteten Ursprungsknoten und der Zielknoten jeweils als Zwischenknoten oder Endknoten des Kommunikationsnetzes aufgefaßt werden. Solche Endknoten können dabei als Rechner eines Dienstanbieters oder als ein Datenendgerät eines Benutzers angesehen werden.

In dem vorliegenden Beispiel möchte ein Benutzer mit seinem Datenendgerät z.B. U1 einen Internetdienst z.B. Video on Demand von einem Rechner z.B. Z eines Dienstanbieters erhalten. Für die Übertragung von Datenpaketen eines solchen Dienstes muß netzseitig eine gewisse Qualitätsgüte in Form einer bestimmten Bandbreite sichergestellt werden. Durch Umleitung der zu einem solchen Dienst gehörenden Datenpakete auf ein die geforderte Qualitätsgüte sicherstellendes alternatives Netz kann die für den Dienst notwendige Bandbreite bereitgestellt werden.

Demnach wird vom Ursprungsknoten z.B. U1 eine Nachricht direkt oder indirekt über zumindest einen Zwischenknoten z.B. ZW1 an den Zugangsknoten ZK1 gesendet, die eine Anforderung der Form Umleitung von Datenpaketen, für deren Übertragung eine bestimmte Qualitätsgüte z. B. Bandbreite gefordert ist, beinhaltet. Der Zugangsknoten übermittelt in Form einer Nachricht das Bitmuster, mit der die auf das alternative Netz zu leitenden Datenpakete gekennzeichnet werden, an den Ursprungsknoten U1 und bestätigt zusätzlich die von dem Ursprungsknoten U1 gesendete Nachricht mit der Anforderung. Außerdem sendet der Zugangsknoten eine Nachricht bezüglich der vom Ursprungsknoten geforderten Qualitätsgüte an die in der Figur nicht gezeigten Netzknoten eines alternativen Netzes z.B. AN1 und wartet gegebenenfalls auf deren Bestätigung. Der Ursprungsknoten U1 kennzeichnet die Datenpakete, die mit einer sichergestellten Qualitätsgüte über das alternative Netz übertragen werden sollen, mit dem vom Zugangsknoten erhaltenen Bitmuster.

Alternativ dazu kann dem Ursprungsknoten U1 ein solches Bitmuster gemäß einer entsprechenden Implementierung bekannt sein, ohne daß ihm es zuvor von dem Zugangsknoten mitgeteilt werden muß. Ein solches Bitmuster befindet sich normalerweise im Kopfteil eines solchen Datenpaketes. Im Zusammenhang mit dem Internet ist das Bitmuster im sogenannten TOS-Byte zu finden.

Bevor nun der Ursprungsknoten U1 die Datenpakete, für deren Übertragung eine geforderte Qualitätsgüte sicherzustellen ist und diese daher über ein alternatives Netz zu leiten sind, in Richtung des Zugangsknotens sendet, ist es möglich, daß der Ursprungsknoten an seinem Zielknoten Datenpakete über das gewöhnliche paketvermittelnde Netz PN eine Nachricht bezüglich der über das alternative Netz zu leitenden übermittelt und gegebenenfalls eine Bestätigung vom Zielknoten erwartet.

Im Zugangsknoten werden die vom Ursprungsknoten U1 her eintreffenden Datenpakete mittels eines in der Figur nicht dargestellten Filters auf das Bitmuster überprüft. Die Datenpakete, bei denen das Bitmuster erkannt wurde, werden auf das alternative Netz umgeleitet. Alternativ dazu kann die Funktion des Filters in die im Zugangsknoten vorhanden zu denkende Routing-Tabelle integriert werden, indem in die Routing-Tabelle zusätzlich die Bitmuster eingetragen werden, die eine Umleitung eines mit dem Bitmuster gekennzeichneten Datenpaketes auf das alternative Netz herbeiführen.

Parallel zu dem vorstehend geschilderten Szenario bezüglich des Ursprungsknotens U1 kann das gleiche Szenario durch einen oder mehrere weitere Ursprungsknoten z.B. U2 angestoßen werden.

Hierbei verwendet der Ursprungsknoten U2 zur Kennzeichnung der Datenpakete, die über ein alternatives Netz z.B. ANn gesendet werden sollen, möglicherweise das gleiche Bitmuster unabhängig von der jeweils geforderten Qualitätsgüte. Alternativ dazu kann der Ursprungsknoten U2 ein Bitmuster zur Kennzeichnung der über das alternative Netz zu leitenden Datenpakete benutzen, das der geforderten Qualitätsgüte entspricht.

Auf diese Weise können die von unter Umständen mehreren Ursprungsknoten in Richtung des Zugangsknotens gesendeten Datenpakete in Klassen gemäß der für ihre Übertragung geforderten Qualitätsgüte zusammengefaßt werden.

Für den Fall, daß die im Zugangsknoten umzuleitenden Datenpakete auf mehrere alternative Netze umgeleitet werden können, wird jedes alternative Netz ein Bitmuster bestimmt. Auf diese Weise können die Datenpakete auf ein dem Bitmuster entsprechendes alternatives Netz, das die geforderte Qualitätsgüte sicherstellt, umgeleitet werden.

Wenn nur ein alternatives Netz zur Umleitung der mit einem Bitmuster gekennzeichneten Datenpakete zur Verfügung steht, kann die vom alternativen Netz sicherzustellende Qualitätsgüte gemäß dem Bitmuster der gekennzeichneten Datenpakete bereitgestellt werden.

Der Zugangsknoten kann den Datenpaketen, die mit einem Bitmuster gekennzeichnet sind, das nicht der vom alternativen Netz bereitgestellten Qualitätsgüte entspricht, die Umleitung auf das alternative Netz verwehren.

Voneinander unabhängige Aktionen der vorstehend geschilderten Szenarien können auch in beliebiger Reihenfolge ablaufen.

## Patentansprüche

1. Verfahren zur Umleitung von Datenpaketen eines paketvermittelnden Netzes (PN) auf zumindest ein alternatives Netz (AK1, ...,ANn), das eine für diese Datenpakete geforderte Qualitätsgüte sicherstellt, wobei das paketvermittelnde und das zumindest eine alternative Netz (AN1, ...,ANn) Teilnetze eines Kommunikationsnetzes bilden, das aus mindestens einem Ursprungsknoten (U1, U2) und mindestens einem Zielknoten (Z) besteht, die jeweils direkt oder indirekt über wenigstens einen Zwischenknoten (ZW1, ZW2) mit einem Zugangsknoten (ZK1, ZK2) verbunden sind, der eine Verbindung sowohl zum paketvermittelnden als auch zu einem alternativen Netz (AN1, ..., ANn) herstellen kann, und zwischen denen (U1, U2; Z) Datenpakete übertragen werden können,
**dadurch gekennzeichnet,**
**dass** für die Umleitung der Datenpakete über ein die für diese Datenpakete geforderte Qualitätsgüte sicherstellendes alternatives Netz (AN1, ...,ANn) die betreffenden Datenpakete in ihrem Ursprungsknoten (U1, U2) lediglich jeweils durch ein dem mit dem Ursprungsknoten (U1, U2) direkt oder indirekt über wenigstens einen Zwischenknoten (ZW1) verbundenen Zugangsknoten (ZK1) für eine solche Umleitung bekanntes Bitmuster gekennzeichnet werden
und **dass** beim Eintreffen solcher durch das betreffende Bitmuster jeweils gekennzeichneter Datenpakete im Zugangsknoten (ZK1) allein aus dem Erkennen des betreffenden Bitmusters eine Umleitung der mit dem betreffenden Bitmuster gekennzeichneten Datenpakete auf ein alternatives Netz (AN1, ...,ANn) veranlaßt wird.

2. Verfahren nach Anspruch 1, **dadurch gekennzeichnet, dass** in einem solchen Zugangsknoten (ZK1, ZK2) ein Filter die von einem Ursprungsknoten (U1, U2) her eintreffenden Datenpakete auf ein dem Zugangsknoten (ZK1, ZK2) bekanntes Bitmuster überprüft und wenn ein bekanntes Bitmuster erkannt wurde, die Umleitung der mit diesem Bitmuster gekennzeichneten Datenpakete auf ein alternatives Netz (AN1, ...,ANn) veranlaßt.

3. Verfahren nach Anspruch 1, **dadurch gekennzeichnet, dass** der mit einem solchen Ursprungsknoten (U1, U2) direkt oder indirekt über wenigstens einen Zwischenknoten (ZW1, ZW2) verbundene Zugangsknoten (ZK1, ZK2) eine Tabelle zur Bestimmung der Verkehrswege enthält, in die das Filter mit seiner Filterfunktion integriert ist, indem sie zusätzlich die Bitmuster beinhaltet, die eine Umleitung eines mit einem solchen Bitmuster gekennzeichneten Datenpaketes auf ein alternatives Netz (AN1, ...,ANn) herbeiführen können.

4. Verfahren nach einem der vorhergehenden Ansprüche,
**dadurch gekennzeichnet, dass** sich ein solches Bitmuster in einem Kopfteil eines über ein alternatives Netz (AN1, ...,ANn) zu leitenden Datenpaketes befindet.

5. Verfahren nach einem der vorhergehenden Ansprüche,
**dadurch gekennzeichnet, dass** von sämtlichen Ursprungsknoten (U1, U2) das gleiche Bitmuster unabhängig von der jeweils geforderten Qualitätsgüte verwendet wird.

6. Verfahren nach einem der Ansprüche 1 bis 4,
**dadurch gekennzeichnet, dass** von den Ursprungsknoten (U1, U2) die der jeweils geforderten Qualitätsgüte entsprechenden Bitmuster verwendet werden.

7. Verfahren nach Anspruch 6, **dadurch gekennzeichnet, dass** jedes erkannte Bitmuster eines Datenpaketes eine Umleitung desselben auf ein dem Bitmuster entprechendes alternatives Netz (AN1, ...,ANn) mit einer bestimmten Qualitätsgute herbeiführt.

8. Verfahren nach Anspruch 6, **dadurch gekennzeichnet, dass** jedes erkannte Bitmuster eines Datenpaketes eine Umleitung desselben auf ein alternatives Netz (AN1, ...,ANn) mit einer dem Bitmuster entsprechenden Qualitätsgüte herbeiführt.

9. Verfahren nach einem der vohergehenden Ansprüche,
**dadurch gekennzeichnet, dass** nach Erkennen eines solchen Bitmusters eines über ein alternatives Netz (AN1, ...,ANn) zu leitenden Datenpaketes in einem solchen Zugangsknoten (ZK1, ZK2) die Umleitung des Datenpaketes auf ein alternatives Netz (AN1, ...,ANn) verhindert werden kann, wenn das alternative Netz (AN1, ...,ANn) nicht die dem Bitmuster entsprechende Qualitätsgüte bereitstellen kann.

10. Verfahren nach einem der vorhergehenden Ansprüche,
**dadurch gekennzeichnet, dass** der Ursprungsknoten, der Datenpakete zu senden beabsichtigt, an seinen Zielknoten (Z) eine Nachricht bezüglich der über ein alternatives Netz (AN1, ...,ANn) zu leitenden Datenpakete über das paketvermittelnde Netz (PN) übermittelt und gegebenfalls eine Bestätigung vom Zielknoten (Z) erwartet.

11. Verfahren nach einem der vorhergehenden Ansprüche,
**dadurch gekennzeichnet, dass** der mit einem solchen Ursprungsknoten (U1, U2) direkt oder indirekt über wenigstens einen Zwischenknoten (ZW1, ZW2) verbundene Zugangsknoten (ZK1, ZK2) eine Nachricht bezüglich der vom Ursprungsknoten (U1, U2) geforderten, sicherzustellenden Qualitätsgüte an die Netzknoten eines solchen alternativen Netzes (AN1, ...,ANn) sendet und gegebenfalls eine Bestätigung von diesen erwartet.

12. Verfahren nach einem der vorhergehenden Ansprüche,
**dadurch gekennzeichnet, dass** es auf eine Netzkonstellation angewendet wird, bei der ein solches alternatives Netz (AN1, ...,ANn) dadurch gebildet wird, dass mindestens ein logischer Kanal des paketvermittelnden Netzes (PN) für die mit einer sichergestellten Qualitätsgüte zu übertragenden Datenpakete reserviert wird.

## Claims

1. Method for diverting data packets in a packet-switching network (PN) to at least one alternative network (AN1, ..., ANn) which ensures a quality level which is demanded for these data packets, where the packet-switching network and the at least one alternative network (AN1, ..., ANn) form subnetworks in a communication network comprising at least one source node (U1, U2) and at least one destination node (Z) which are respectively connected directly or indirectly via at least one intermediate node (ZW1, ZW2) to an access node (ZK1, ZK2) which can set up a connection either to the packet-switching network or to an alternative network (AN1, ..., ANn) and between which (U1, U2; Z) it is possible to transmit data packets,
**characterized**
**in that**, for the purpose of diverting the data packets via an alternative network (AN1, ..., ANn) which ensures the quality level demanded for these data packets, the data packets in question are characterized at their source node (U1, U2) merely by a respective bit pattern which is known to the access node (ZK1), connected to the source node (U1, U2) directly or indirectly via at least one intermediate node (ZW1), for such a diversion,
and **in that**, upon the arrival of such data packets respectively **characterized by** the bit pattern in question at the access node (ZK1), merely identification of the bit pattern in question prompts diversion of the data packets **characterized by** the bit pattern in question to an alternative network (AN1, ..., ANn).

2. Method according to Claim 1, **characterized in that** a filter at such an access node (ZK1, ZK2) checks the data packets arriving from a source node (U1, U2) for a bit pattern which is known to the access node (ZK1, ZK2) and, if a known bit pattern has been identified, prompts diversion of the data packets **characterized by** this bit pattern to an alternative network (AN1, ..., ANn).

3. Method according to Claim 1, **characterized in that** the access node (ZK1, ZK2) connected to such a source node (U1 U2) directly or indirectly via at least one intermediate node (ZW1, ZW2) contains a table for determining the transport paths into which the filter with its filter function has been integrated by virtue of the latter additionally containing the bit patterns which can cause diversion of a data packet **characterized by** such a bit pattern to an alternative network (AN1, ..., ANn).

4. Method according to one of the preceding claims, **characterized in that** such a bit pattern is contained in a header part of a data packet which needs to be routed via an alternative network (AN1, ..., ANn).

5. Method according to one of the preceding claims, **characterized in that** all the source nodes (U1, U2) use the same bit pattern regardless of the respective quality level demanded.

6. Method according to one of Claims 1 to 4, **characterized in that** the source nodes (U1, U2) use the bit patterns corresponding to the respective quality level demanded.

7. Method according to Claim 6, **characterized in that** each identified bit pattern in a data packet causes said data packet to be diverted to an alternative network (AN1, ..., ANn), corresponding to the bit pattern, with a particular quality level.

8. Method according to Claim 6, **characterized in that** each identified bit pattern in a data packet causes said data packet to be diverted to an alternative network (AN1, ..., ANn) with a quality level which corresponds to the bit pattern.

9. Method according to one of the preceding claims, **characterized in that**, following identification of such a bit pattern in a data packet which is to be routed via an alternative network (AN1, ..., ANn) at such an access node (ZK1, ZK2), diversion of the data packet to an alternative network (AN1, ..., ANn) can be prevented if the alternative network (AN1, ..., ANn) cannot provide the quality level which corresponds to the bit pattern.

10. Method according to one of the preceding claims, **characterized in that** the source node which intends to send data packets uses the packet-switching network (PN) to transmit to its destination node (Z) a message regarding the data packets which are to be routed via an alternative network (AN1, ..., ANn), and if appropriate awaits confirmation from the destination node (Z).

11. Method according to one of the preceding claims, **characterized in that** the access node (ZK1, ZK2) connected to such a source node (U1, U2) directly or indirectly via at least one intermediate node (ZW1, ZW2) sends a message regarding the quality level to be ensured which is demanded by the source node (U1, U2) to the network nodes in such an alternative network (AN1, ..., ANn), and if appropriate awaits confirmation from these.

12. Method according to one of the preceding claims, **characterized in that** it is applied to a network configuration in which such an alternative network (AN1, ..., ANn) is formed by reserving at least one logical channel in the packet-switching network (PN) for the data packets which are to be transmitted with an assured quality level.

## Revendications

1. Procédé destiné au réacheminement de paquets de données d'un réseau (PN) à commutation par paquets vers, au moins, un réseau de rechange (AN1, ..., ANn) qui garantit une qualité requise pour ces paquets de données, le réseau à commutation par paquets et le, au moins un, réseau de rechange (AN1, ..., ANn) formant des réseaux partiels d'un réseau de communication, qui se compose d'au moins un nodal d'origine (U1, U2) et, au moins, un nodal de destination (Z), reliés chacun directement ou indirectement par l'intermédiaire de, au moins, un nodal intermédiaire (ZW1, ZW2) à un nodal d'accès (ZK1, ZK2), lequel peut établir une liaison non seulement vers le réseau à commutation par paquets, mais aussi vers le réseau de rechange (AN1, ..., ANn), et entre lesquels (U1, U2; Z) des paquets de données peuvent être transmis
**caractérisé par le fait**
**que**, pour le réacheminement des paquets de données à travers un réseau de rechange (AN1, ..., ANn) assurant la qualité requise pour ces paquets de données, les paquets de données concernés sont caractérisés, dans leur nodal d'origine (U1, U2), seulement chacun par un profil binaire connu, pour un tel réacheminement, du nodal d'accès (ZK1) relié au nodal d'origine (U1, U2) directement ou indirectement par l'intermédiaire de, au moins, un nodal intermédiaire (ZW1) et
**que**, lorsque de tels paquets de données, caractérisés chacun par le profil binaire concerné, arrivent dans le nodal d'accès (ZK1), un réacheminement, vers un réseau de rechange (AN1, ..., ANn), des paquets de données caractérisés avec le profil binaire concerné est déclenché.

2. Procédé selon la revendication 1
**caractérisé par le fait**
**que**, dans un tel nodal d'accès (ZK1, ZK2), un filtre contrôle les paquets de données, arrivant d'un nodal d'origine (U1, U2), quant à un profil binaire connu du nodal d'accès (ZK1, ZK2), et, lorsqu'un profil binaire connu est reconnu, provoque le réacheminement, vers un réseau de rechange (AN1, ..., ANn), des paquets de données **caractérisés par** ce profil binaire.

3. Procédé selon la revendication 1
**caractérisé par le fait**
**que** le nodal d'accès (ZK1, ZK2), relié à un tel nodal d'origine (U1, U2), directement ou indirectement par l'intermédiaire de, au moins, un nodal intermédiaire (ZW1, ZW2), renferme un tableau, destiné à la détermination des cheminements du trafic et dans lequel est intégré le filtre avec sa fonction de filtrage, par le fait qu'il renferme, en supplément, les profils binaires qui peuvent provoquer un réacheminement vers un réseau de rechange (AN1, ..., ANn) d'un paquet de données **caractérisé par** un tel profil binaire.

4. Procédé selon l'une des revendications précédentes
**caractérisé par le fait**
**qu'**un tel profil binaire se trouve dans l'en-tête d'un paquet de données à guider à travers un réseau de rechange (AN1, ..., ANn).

5. Procédé selon l'une des revendications précédentes
**caractérisé par le fait**
**que** l'ensemble des nodaux d'origine (U1, U2) utilisent le même profil binaire indépendamment de la qualité requise dans chaque cas.

6. Procédé selon l'une des revendications 1 à 4
**caractérisé par le fait**
**que** les nodaux d'origine (U1, U2) utilisent le profil binaire correspondant à la qualité requise dans chaque cas.

7. Procédé selon la revendication 6
**caractérisé par le fait**
**que** chaque profil binaire reconnu d'un paquet de données provoque son réacheminement vers un réseau de rechange (AN1, ..., ANn) correspondant au profil binaire et ayant un qualité déterminée.

8. Procédé selon la revendication 6
**caractérisé par le fait**
**que** chaque profil binaire reconnu d'un paquet de données provoque son réacheminement vers un réseau de rechange (AN1, ..., ANn) correspondant au profil binaire et ayant une qualité correspondant au profil binaire.

9. Procédé selon l'une des revendications précédentes
**caractérisé par le fait**
**que**, une fois qu'un tel profil binaire d'un paquet de données à guider à travers un réseau de rechange (AN1, ..., ANn) a été reconnu, le réacheminement du paquet de données vers un réseau de rechange (AN1, ..., ANn) peut être empêché dans un tel nodal d'accès (ZK1, ZK2), lorsque le réseau de rechange (AN1, ..., ANn) ne peut pas offrir la qualité correspondant au profil binaire.

10. Procédé selon l'une des revendications précédentes
**caractérisé par le fait**
**que** le nodal d'origine, qui se prépare à envoyer des paquets de données, transmet, à son nodal de destination (Z) et par l'intermédiaire du réseau (PN) à commutation par paquets, un message relatif aux paquets de données à guider à travers un réseau de rechange (AN1, ..., ANn) et, le cas échéant, attend une confirmation du nodal de destination (Z).

11. Procédé selon l'une des revendications précédentes
**caractérisé par le fait**
**que** le nodal d'accès (ZK1, ZK2), relié à un tel nodal d'origine (U1, U2), directement ou indirectement par l'intermédiaire de, au moins, un nodal intermédiaire (ZW1, ZW2), envoie un message, relatif à la qualité à garantir exigée par le nodal d'origine (U1, U2), aux nodaux d'un tel réseau de rechange (AN1, ..., ANn) et, le cas échéant, attend de ceux-ci une confirmation.

12. Procédé selon l'une des revendications précédentes
**caractérisé par le fait**
**qu'**il est appliqué sur une constellation de réseau dans laquelle un tel réseau de rechange (AN1, ..., ANn) est formé en réservant au moins un canal logique du réseau (PN) à commutation par paquets pour les paquets de données à transmettre avec une qualité garantie.
